# EUROPEAN PATENT APPLICATION

(11) **EP 2 882 225 A1**
(43) Date of publication of application: **10.06.2015**
(21) Application number: 13825674.8
(22) Date of filing: 31.07.2013
(51) Int. Cl.: H04W 36/00

(54) **SUSPEND METHOD, APPARATUS AND SYSTEM**

(30) Priority: 31.07.2012 CN 201210270157
(71) Applicant: ZTE Corporation, Shenzhen, Guangdong 518057 (CN)
(72) Inventor: YANG, Bin, Shenzhen Guangdong Province 518057 (CN)
(74) Representative: Novagraaf Technologies
(86) International application number: PCT/CN2013/080572
(87) International publication number: WO 2014/019522

(57) **Abstract**

Provided are a Suspend method, apparatus and system. The method includes: an MME releasing a local GBR bearer of a user in the MME, and sending a Suspend message to an SGW, the Suspend message being used for instructing the SGW to release a local GBR bearer of the SGW according to the Suspend message and set a local state of the user in the SGW to a Suspend state, the Suspend state being used for instructing not to forward downlink data packet for the user; and the MME setting a local state of the user in the MME to a Suspend state according to a Suspend response message received from the SGW**.** Through the technical solution, the problems that in related technologies, the Suspend procedure is complex and low in efficiency are solved, and the execution efficiency of the Suspend procedure is improved.

## Description

### Technical Field

The present invention relates to the field of communications, and in particular to a Suspend method, apparatus and system.

### Background

The packet domain of the 3rd generation partnership project (3GPP) consists of a UMTS Terrestrial Radio Access Network (UTRAN), a Global System for Mobile communications (GSM) Enhanced Data Rate for GSM Evolution (EDGE) Radio Access Network (GSM EDGE Radio Access Network, GERAN for short), a Serving GPRS Support Node (SGSN), a Gateway GPRS Support Node (GGSN), a Home Location Register (HLR) and other support nodes.

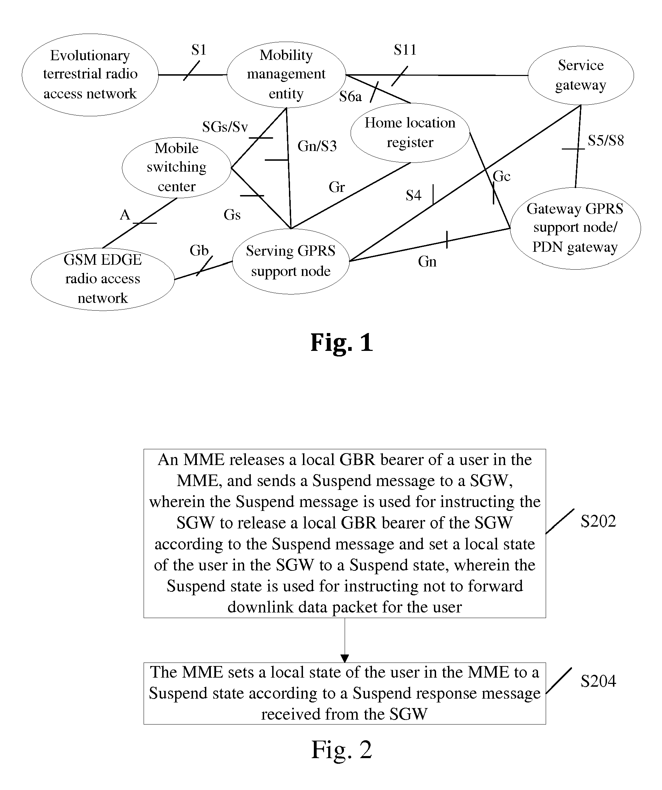

Fig. 1 is a schematic diagram showing the system architecture of the 3GPP packet domain according to the related art. As shown in Fig. 1, the SGSN is responsible for functions such as mobility management, session management, packet forwarding and charging; the GGSN is responsible for functions such as charging and packet data forwarding; the Home Subscriber Server (HSS) is responsible for storing user subscription data and the distribution of the subscription data; the GERAN is responsible for the radio access, radio resource management, data packet forwarding, etc. in a Gb/Iu mode; the Service Gateway (S-GW) is responsible for functions such as charging, session management and packet forwarding; the Packet Data Network Gateway (P-GW) is responsible for functions such as charging, session management, packet forwarding, and dedicated bearer establishment; and the MSC Server is responsible for initiating user voice and establishing an IP Multimedia Sub-system (IMS) voice session.

A user performs Circuit Switched Fallback (CSFB) or Single Radio Voice Call Continuity (SRVCC), when a selected target access type is the GERAN, and if a Dual Transfer Mode (DTM) manner is not supported, then a Guaranteed Bit Rate (GBR) bearer in a Long Term Evolution (LTE) domain in which a user temporarily resides should be deleted, and a non-GBR bearer should be suspended temporarily. At present, the deletion of the GBR bearer as stipulated in the protocol is that a Mobility Management Entity (MME) notifies the SGW/PGW to send a Delete Bearer Command message, and then the PGW initiates a dedicated bear deleting process of a network side. Then the Suspend procedure is performed to suspend the non-GBR bearer. However, this Suspend procedure is complex and low in efficiency.

Aiming at the problem that the Suspend procedure is complex and low in efficiency in the relevant art, no effective solution has been proposed so far.

### Summary

Aiming at the problem in the relevant art that the Suspend procedure is complex and low in efficiency, the embodiments of the present invention provide a suspend method, apparatus and system, which at least solves the above problem.

According to an embodiment of the present invention, a Suspend method is provided and includes: an MME releasing a local GBR bearer of a user in the MME, and sending a Suspend message to an SGW, wherein the Suspend message is used for instructing the SGW to release a local GBR bearer of the SGW according to the Suspend message and set a local state of the user in the SGW to a Suspend state, wherein the Suspend state is used for instructing not to forward downlink data packet for the user; and the MME setting a local state of the user in the MME to a Suspend state according to a Suspend response message received from the SGW**.**

In the described embodiment, the Suspend message carries a bearer identifier which is used for representing the GBR bearer released by the MME, and after the Suspend message is sent to the SGW, the method further includes: the SGW releasing the local GBR bearer of the SGW according to the bearer identifier; and the SGW setting the local state of the user in the SGW to the Suspend state.

In the described embodiment, after the SGW releases the local GBR bearer of the SGW according to the bearer identifier, and before the SGW sets the local state of the user in the SGW to the Suspend state, the method further includes: a PGW receiving the Suspend message sent by the SGW;
the PGW releasing the local GBR bearer of the PGW according to the bearer identifier in the Suspend message, and setting the local state of the user in the PGW to the Suspend state; and the PGW sending the Suspend response message to the SGW.

In the described embodiment, before the PGW sends the Suspend response message to the SGW, the method further includes: the PGW notifying a Policy and Charging Rules Function (PCRF) to release the local GBR bearer of the PCRF.

In the described embodiment, after the SGW sets the local state of the user in the SGW to the Suspend state, the method further includes: the SGW sending the Suspend response message to the MME.

In the described embodiment, in an SRVCC procedure, the bearer identifier further includes: a Voice Bearer (VB) mark which is used for representing that the releasing of the GBR bearer is initiated by the SRVCC procedure.

In the described embodiment, before the MME releases the local GBR bearer of the user in the MME and sends the Suspend message to the SGW, the method further includes: the user switching from an EUTRAN to a GERAN, wherein the GERAN does not support a DTM.

According to another embodiment of the present invention, a Suspend method is provided and includes: an SGW/PGW receiving a Suspend message from an MME; and the SGW/PGW releasing a local GBR bearer of the SGW/PGW according to the Suspend message, and setting a local state of a user in the SGW/PGW to a Suspend state, wherein the Suspend state is used for instructing not to forward downlink data packet for the user; and the SGW/PGW sending the Suspend response message to the MME.

According to still another embodiment of the present invention, a Suspend apparatus located in an MME is provided and includes: a first releasing component, configured to release a local GBR bearer of a user in the MME; a first sending component, configured to send a Suspend message to an SGW, wherein the Suspend message is used for instructing the SGW to release a local GBR bearer of the SGW according to the Suspend message and set a local state of the user in the SGW to a Suspend state, wherein the Suspend state is used for instructing not to forward downlink data packet for the user; a first receiving component, configured to receive a Suspend message from the SGW; and a first setting component, configured to set a local state of the user in the MME to a Suspend state according to the Suspend response message received from the first receiving component.

According to still another embodiment of the present invention, a Suspend apparatus located in the SGW/PGW is provided and includes: a second receiving component, configured to receive a Suspend message from an MME; a second releasing component, configured to release a local GBR bearer of the SGW/PGW according to the Suspend message; a second setting component, configured to set a local state of a user in the SGW/PGW to a Suspend state, wherein the Suspend state is used for instructing not to forward downlink data packet for the user; and a second sending component, configured to send a Suspend response message to the MME.

According to yet another embodiment of the present invention, a Suspend system is provided and includes: the above-mentioned Suspend apparatus located in the MME and the above-mentioned Suspend apparatus located in the SGW/PGW.

By means of the embodiments of the present invention, an MME releases a local GBR bearer of a user in the MME, and sends a Suspend message to an SGW, wherein the Suspend message is used for instructing the SGW to release a local GBR bearer of the SGW according to the Suspend message and set a local state of the user in the SGW to a Suspend state, wherein the Suspend state is used for instructing not to forward downlink data packet for the user; and the MME sets a local state of the user in the MME to a Suspend state according to a Suspend response message received from the SGW. By virtue of the above technical solution, the problems in related art that the Suspend procedure is complex and low in efficiency are solved, and the execution efficiency of the Suspend procedure is improved.

### Brief Description of the Drawings

Drawings, provided for further understanding of the present invention and forming a part of the specification, are used to explain the present invention together with embodiments of the present invention rather than to limit the present invention. In the drawings:
Fig. 1 is a schematic diagram showing the system architecture of the 3GPP packet domain according to the related art;
Fig. 2 is a flowchart of a Suspend method according to an embodiment of the present invention;
Fig. 3 is a structural block diagram of a Suspend apparatus according to an embodiment of the present invention;
Fig. 4 is a flowchart of another Suspend method according to an embodiment of the present invention;
Fig. 5 is a structural block diagram of another Suspend apparatus according to an embodiment of the present invention;
Fig. 6 is a structural block diagram of a Suspend system according to an embodiment of the present invention;
Fig. 7 is a schematic diagram of a Suspend procedure in a CSFB procedure according to the related art;
Fig. 8 is a schematic diagram of a Suspend procedure in the CSFB procedure according to embodiment I of the present invention;
Fig. 9 is a schematic diagram of a Suspend procedure in an SRVCC procedure according to the related art;
and Fig. 10 is a schematic diagram of a Suspend procedure in the SRVCC procedure according to embodiment II of the present invention;

### Detailed Description of the Embodiments

The present invention is described below with reference to the accompanying drawings and embodiments in detail. Note that, the embodiments of the present invention and the features of the embodiments can be combined with each other if there is no conflict.

In the present embodiment, a Suspend method is provided. Fig. 2 is a flowchart of a Suspend method according to an embodiment of the present invention, as shown in Fig. 2, the method includes the following steps.

Step 202, an MME releases a local GBR bearer of a user in the MME, and sends a Suspend message to a SGW, wherein the Suspend message is used for instructing the SGW to release a local GBR bearer of the SGW according to the Suspend message and set a local state of the user in the SGW to a Suspend state, wherein the Suspend state is used for instructing not to forward downlink data packet for the user.

Step 204, the MME sets a local state of the user in the MME to a Suspend state according to a Suspend response message received from the SGW.

In this embodiment, by means of the above-mentioned steps, when the MME sends the Suspend message, the local GBR bearer of the MME is released simultaneously. After the Suspend response message of the SGW is received, the local state of the user in the MME is set to the Suspend state. Compared with the manner that the MME firstly notifies the SGW/PGW, and then the PGW initiates the Suspend procedure in related art, half of the procedure is saved by the present technical solution, and the problems in related art that the Suspend procedure is complex and low in efficiency are solved, and the execution efficiency of the Suspend procedure is improved.

As an example embodiment, the MME may inform the SGW/PGW of the GBR bearer which needs to be released by way of carrying a bearer identifier (such as, by means of a Bearer Contexts field) in the Suspend message. For example, the bearer identifier may indicate a GBR bearer which is released by the MME, in this case, the SGW may release the local GBR bearer of the SGW according to the bearer identifier, and set the local state of the user in the SGW to the Suspend state. In an example embodiment, after the local state of the user is set to a Suspend state, the SGW may send the Suspend response message to the MME.

In an example embodiment, after the SGW releases the local GBR bearer, a Suspend message may be sent to the PGW firstly, after the Suspend response message of the PGW is received, the operation of setting the local state of the user in the SGW to the Suspend state is then performed. After receiving the Suspend message sent by the SGW, the PGW may release the local GBR bearer of the PGW according to the bearer identifier in the Suspend message, and set the local state of the user in the PGW to the Suspend state, and then send the Suspend response message to the SGW.

In addition, in an example embodiment, after the PGW releases the local GBR bearer of the PGW, a PCRF may also be notified to release the local GBR bearer of the PCRF.

As an example embodiment, in the case that the Suspend procedure is used in a SRVCC procedure, the above-mentioned bearer identifier may also include a VB mark which is used for indicating that the releasing of the GBR bearer is initiated by the SRVCC procedure.

In an example embodiment, the Suspend procedure in this embodiment may be used in a scenario where a user switches from an EUTRAN to a GERAN which does not support a DTM.

Corresponding to the above-mentioned Suspend method, a Suspend apparatus located in an MME is provided in this embodiment. The apparatus is used for realizing the above-mentioned example embodiments, and what has been described is not repeated. As used hereinafter, the term "component" may realize hardware and/or software combination with a predetermined function. Although the apparatus described in the following embodiment is preferably implemented by software, but the hardware, or a combination of the software and hardware also possibly be conceived.

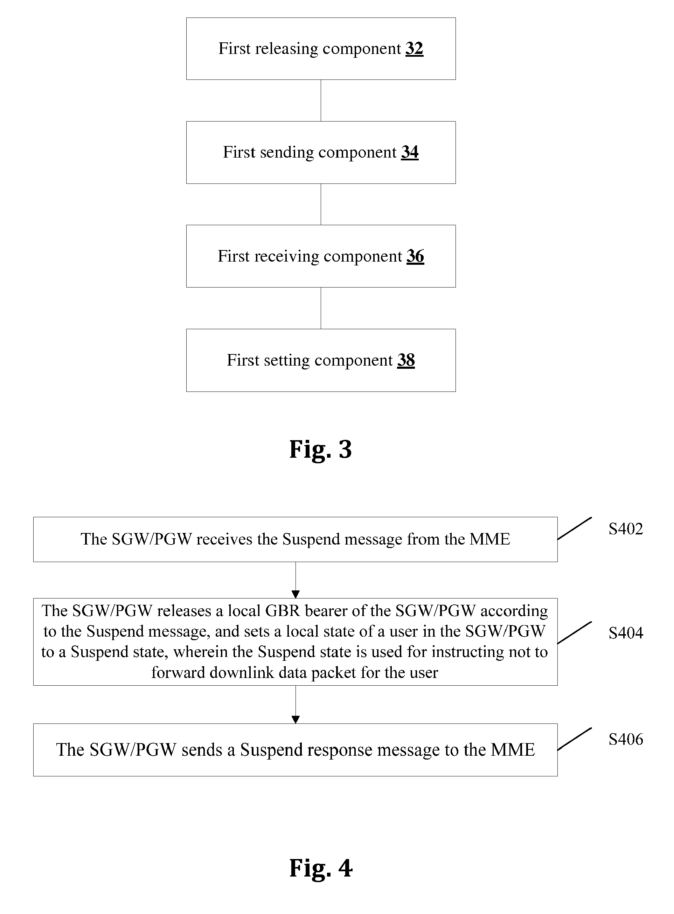

Fig. 3 is a structural block diagram of a Suspend apparatus according to an embodiment of the present invention. As shown in the Fig. 3, the apparatus includes a first releasing component **32,** a first sending component **34,** a first receiving component **36** and a first setting component **38,** and each component is described below in detail.

The first releasing component **32** is configured to release a local GBR bearer of a user in the MME; the first sending component **34** is coupled to the first releasing component **32,** and is configured to send a Suspend message to a SGW, wherein the Suspend message is used for instructing the SGW to release a local GBR bearer of the SGW according to the Suspend message and set a local state of the user in the SGW to a Suspend state, wherein the Suspend state is used for instructing not to forward downlink data packet for the user; the first receiving component **36** is coupled to the first sending component **34,** and is configured to receive a Suspend message from the SGW; and the first setting component **38** is coupled to the first receiving component **36,** and is configured to set a local state of the user in the MME to a Suspend state according to the Suspend response message received by the first receiving component **36.**

In this embodiment, by means of the above-mentioned components, when the first sending component **34** sends the Suspend message, the MME simultaneously uses the first releasing component **32** to release the local GBR bearer of the MME, and after first receiving component **36** receives the Suspend response message of the SGW, the local state of the user in the MME is set to the Suspend state by the first setting component **38.** Compared with the manner that the MME firstly notifies the SGW/PGW, and then the PGW initiates the Suspend procedure, half of the procedure is saved by virtue of these components, and the problems in related art that the Suspend procedure is complex and low in efficiency are solved, and the execution efficiency of the Suspend procedure is improved.

Another Suspend method is provided in this embodiment. Fig. 4 is a flowchart of another Suspend method according to an embodiment of the present invention. As shown in Fig. 4, the method includes the following steps.

Step S402, the SGW/PGW receives the Suspend message from the MME.

Step S404, the SGW/PGW releases a local GBR bearer of the SGW/PGW according to the Suspend message, and sets a local state of a user in the SGW/PGW to a Suspend state, wherein the Suspend state is used for instructing not to forward downlink data packet for the user.

Step S406, the SGW/PGW sends a Suspend response message to the MME.

In this embodiment, by means of the above-mentioned steps, after receiving the Suspend message, the SGW/PGW releases the local GBR bearer of the SGW/PGW, and after the local state of the user in the SGW/PGW is set to the Suspend state, a Suspend response message is sent to the MME. Compared with the manner that the MME firstly notifies the SGW/PGW, and then the PGW initiates the Suspend procedure, half of the procedure is saved by virtue of the technical solution, and the problems in related art that the Suspend procedure is complex and low in efficiency are solved, and the execution efficiency of the Suspend procedure is improved.

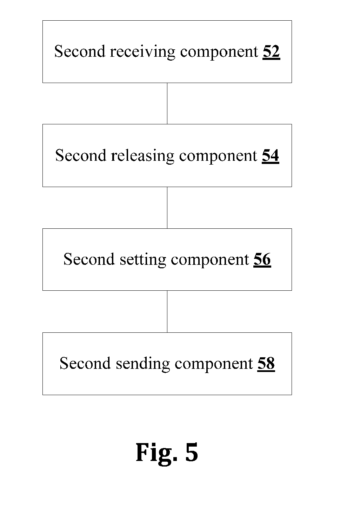

Corresponding to another Suspend method as shown in Fig. 4, another Suspend apparatus located in the SGW/PGW is also provided in this embodiment. Fig. 5 is a structural block diagram of another Suspend apparatus according to an embodiment of the present invention. As shown in Fig. 5, the apparatus includes: a second receiving component **52,** a second releasing component **54,** a second setting component **56** and a second sending component **58,** and each component is described below in detail.

The second receiving component **52** is configured to receive a Suspend message from an MME; the second releasing component **54** is coupled to the second receiving component **52,** and is configured to release a local GBR bearer of the SGW/PGW according to the Suspend message received by the second receiving component **52;** the second setting component **56** is coupled to the second releasing component **54,** and is configured to set a local state of a user in the SGW/PGW to a Suspend state, wherein the Suspend state is used for instructing not to forward downlink data packet for the user; and the second sending component **58** is coupled to the second setting component **56,** and is configured to send a Suspend response message to the MME.

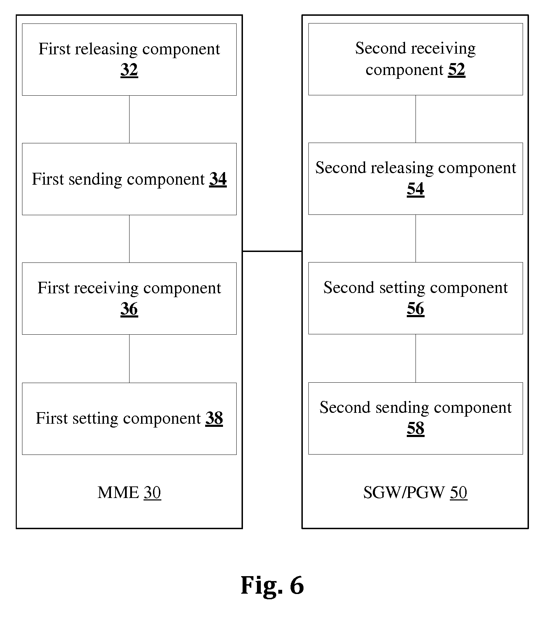

A Suspend system is provided in this embodiment. Fig. 6 is a structural block diagram of a Suspend system according to an embodiment of the present invention. As shown in Fig. 6, the system includes the Suspend apparatus located in the MME **30** as shown in Fig. 3, and also includes the Suspend apparatus located in the SGW/PGW **50** as shown in Fig. 5.

The technical solution provided by the embodiments of the present invention is described as follows in combination with example embodiments, and the following example embodiments combine the embodiments as described above and the example implementation thereof.

A simplified Suspend procedure negotiation method is provided in the example embodiment. Herein below, an optimized bearer Suspend procedure performed when a user performing a voice service switches to a 2/3G network in the LTE field is described as an example. In this simplified procedure, the deletion of a GBR bearer and the suspend of a non-GBR bearer may be directly completed by a Suspend procedure.

The procedure mentioned in the following example embodiments may include a CSFB procedure from E-UTRAN to GERAN of an MO/MT call with No PS HO support, and an SRVCC procedure from E-UTRAN to GERAN without DTM support.

The SGSN may be GnGp SGSN, and also may be S4 SGSN.

The CSFB and SRVCC procedures with a target Radio Access Type (RAT) being the GERAN are initiated at the user side. If a DTM mode is not supported, the user performs voice service in a CS region of a GERAN access, then for a bearer of a user which resides in the LTE region, the MME performs the Suspend procedure to perform the deletion of the GBR bearer and the suspend of the non-GBR bearer, wherein the GBR bearer is deleted locally, and it is not necessary for the PGW to reversely initiate a bearer deleting procedure. Such a processing manner simplifies the processing to the procedure, reduces messages of an S11 interface and an S5/S8 interface, reduces a dedicated bearer deleting procedure initiated by the PGW, and thus reduces the processing to a conflict procedure brought by the dedicated bearer deleting procedure initiated by the PGW.

### Embodiment one

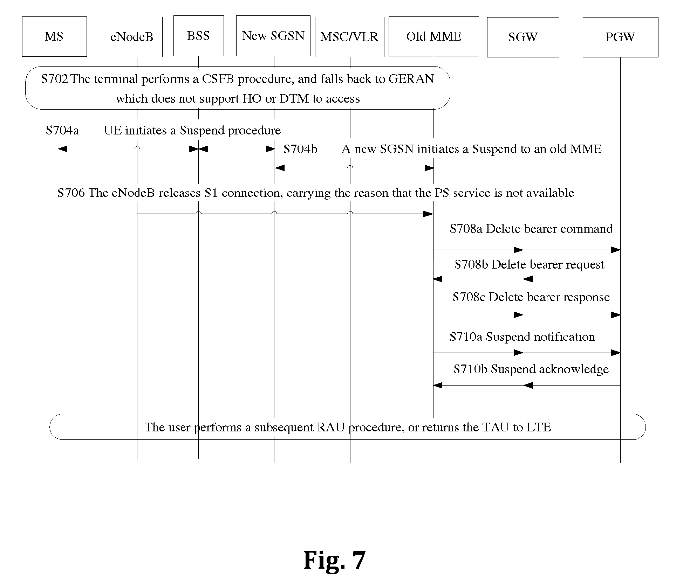

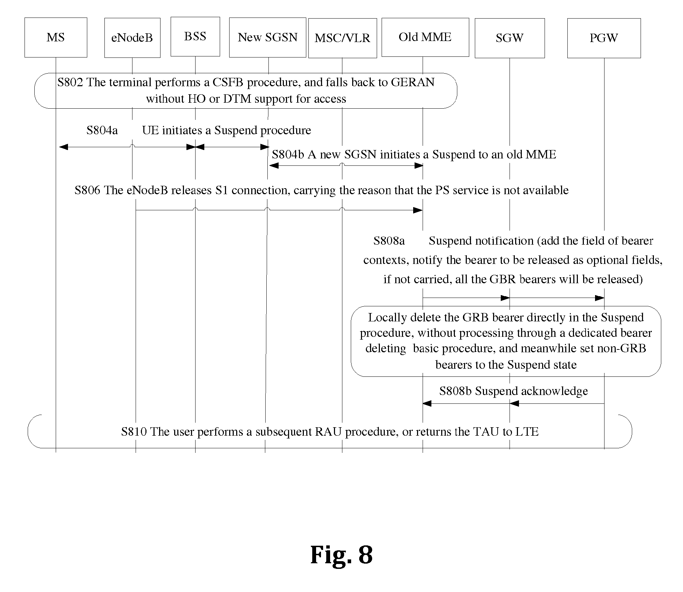

In the present example embodiment, the functional description about a CSFB procedure is described as an example. Fig. 7 is a schematic diagram of a Suspend procedure in a CSFB procedure according to the related art. As shown in Fig. 7, a CSFB procedure with a target RAT being the GERAN is initiated by the user, because the user or the GERAN does not support a DTM manner, then the UE initiates a Suspend procedure in the GERAN, and the SGSN forwards a Suspend message to the MME to initiate the Suspend. Fig. 8 is a schematic diagram of a Suspend procedure in the CSFB procedure according to the embodiment I of the present invention. As shown in Fig. 8, the eNodeB may initiate in the procedure an S1 connection release with the reason that the PS service is unavailable. The MME receives the message, locally deletes the GBR bearer and sends the Suspend message to the SGW**.** The SGW locally deletes the GBR bearer and sends the Suspend message to the PGW. The PGW locally deletes the GBR bearer and notifies the PCRF, returns a Suspend response message to the SGW, sets the user state to a Suspend state and does not forward downlink data packet. The SGW sets the user state to the Suspend state and returns a Suspend response message to the MME. The MME sets the user state to the Suspend state. The processing procedures of a new SGSN and an MSC Server do not change.

As shown in Fig. 8, the Suspend procedure includes the following steps.

Step S802, users jointly registered (the update of the position of the CS is completed by the LTE) in the LTE region initiate a calling flow of an MO or MT, and performs the CSFB with the destination access type being the GERAN.

Step S804, because the user or the BSC in the GERAN access type does not support the DTM, the user initiates the Suspend procedure.

Step S806, the eNodeB initiates an S1 connection release message to the MME in the CSFB procedure, carrying the reason that the PS service is not available.

Step S808, the MME performs the Suspend procedure to delete the GBR bearer, sends a Suspend message to the SGW**.** The SGW deletes the GBR bearer and sends the Suspend message to the PGW. The PGW deletes the GBR bearer and notifies a PCRF of the bearer deleting. The PGW simultaneously sets the user state to the Suspend state, does not forward downlink data packet and sends the Suspend response message to the SGW. The SGW sets the user state to the Suspend state and sends the Suspend message to the MME. The MME sets the user state to the Suspend state.

Step S810, if the user has completed the voice service in a CS region of a GERAN access type, the user performs a RAU procedure to complete the registration in the SGSN and switches the non-GBR bearer to the SGSN, or performs the TAU to return to the LTE.

### Embodiment two

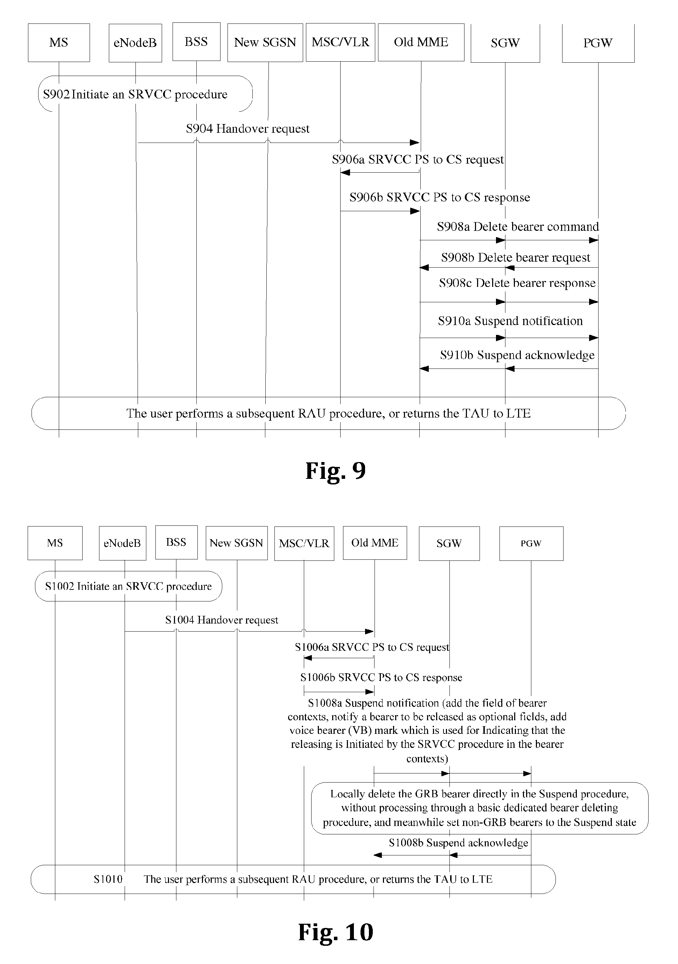

In the present example embodiment, the functional description about the SRVCC procedure is described as an example. Fig. 9 is a schematic diagram of a Suspend procedure in an SRVCC procedure according to the related art. As shown in Fig. 9, the SRVCC procedure with a target RAT being GERAN is initiated at the user side, because the user or the GERAN does not support a DTM manner, then UE initiates a Suspend procedure in the GERAN, and an SGSN forwards a Suspend message to the MME to initiate Suspend. Fig. 10 is a schematic diagram of a Suspend procedure in the SRVCC procedure according to embodiment II of the present invention. As shown in Fig. 10, when a CS to PS SRVCC Response message returned from the MSC Server and received by the MME indicates success, the MME locally deletes the GBR bearer and sends the Suspend message to the SGW, carrying a VB mark for the bearer with QCI=1 to indicate that the bearer deletion is resulted by the SRVCC. The SGW locally deletes the GBR bearer, sends the Suspend message to the PGW, carrying a VB mark for the bearer with QCI=1 to indicate that the bearer deletion is resulted by the SRVCC. The PGW locally deletes the GBR bearer and notifies the PCRF. The PGW returns a Suspend response message to the SGW, sets the user state to a Suspend state and does not forward downlink data packet. The SGW sets the user state to the Suspend state, returns a Suspend response message to the MME. The MME sets the user state to the Suspend state. The processing procedures of a new SGSN and an MSC Server do not change.

As shown in Fig. 10, the Suspend procedure includes the following steps.

Step S1002, a user using an IMS service in the LTE region moves to an access region of the GERAN and initiates an SRVCC procedure to switch the voice to the IMS mode of the CS.

Step S1004, the MME receives an SRVCC switching request message sent by the eNodeB, judges the type to be SRVCC from E-UTRAN to GERAN without DTM support, and sends a SRVCC PS to CS Request message to notify the MSC Server to perform the switching procedure of the SRVCC.

Step S1006, after the SRVCC switch of the user is completed, the MSC Server sends a SRVCC PS to CS Response message to the MME.

Step S1008, the MME judges that the procedure is that the SRVCC from E-UTRAN to GERAN without DTM support, performs the Suspend procedure to delete the GBR bearer, sends the Suspend message to the SGW, carrying a VB mark for the bearer with QCI=1 to indicate that the bearer deletion is resulted by the SRVCC. The SGW deletes the GBR bearer, sends the Suspend message to the PGW, carrying a VB mark for the bearer with QCI=1 to indicate that the bearer deletion is resulted by the SRVCC. The PGW deletes the GBR bearer and notifies the PCRF. The PGW simultaneously sets the user state to the Suspend state, does not forward downlink data packet, and sends the Suspend response message to the SGW**.** The SGW sets the user state to the Suspend state and sends the Suspend message to the MME. The MME sets the user state to the Suspend state.

Step S1010, if the user has completed the IMS voice service in a CS region under a GERAN access type, the user performs a RAU procedure to complete the registration in the SGSN and switches the non-GBR bearer to the SGSN, or performs the TAU to return to the LTE.

In a further embodiment, also provided is software which is used to perform the above-mentioned embodiments and the technical solutions described in the example embodiments.

In another embodiment, a storage medium is also provided, the storage medium stores the above-mentioned software, and the storage medium includes, but is not limited to a light disk, a floppy disk, a hard disk, a flash memory, etc.

Obviously, those skilled in the art should know that each of the above-mentioned components or steps of the present invention can be realized by universal computing devices; the components or steps can be intensively installed on single computing device, or distributed on the network formed by multiple computing devices, Selectively, they can be realized by the program codes which can be executed by the computing device, thereby, the components or steps can be stored in the storage device and executed by the computing device. And under some circumstances, the shown or described steps can be executed in different orders, or can be independently manufactured as each integrated circuit component, or multiple components or steps thereof can be manufactured to be a single integrated circuit component, thus to be realized. In this way, the present invention is not restricted to any particular hardware and software combination.

The descriptions above are only the example embodiment of the present invention, which are not used to restrict the present invention. For those skilled in the art, the present invention may have various changes and variations. Any amendments, equivalent substitutions, improvements, etc. within the principle of the present invention are all included in the scope of the protection as defined by the appended claims of the present invention.

## Claims

1. A Suspend method, **characterized by** comprising:
a Mobility Management Entity (MME) releasing a local Guaranteed Bit Rate (GBR) bearer of a user in the MME, and sending a Suspend message to a Service Gateway (SGW); wherein the Suspend message is used for instructing the SGW to release a local GBR bearer of the SGW according to the Suspend message and set a local state of the user in the SGW to a Suspend state, wherein the Suspend state is used for instructing not to forward downlink data packet for the user;
and the MME setting a local state of the user in the MME to a Suspend state according to a Suspend response message received from the SGW**.**

2. The method according to claim 1, **characterized in that** the Suspend message carries a bearer identifier which is used for representing the GBR bearer released by the MME, and after the Suspend message is sent to the SGW, the method further comprises:
the SGW releasing the local GBR bearer of the SGW according to the bearer identifier;
and the SGW setting the local state of the user in the SGW to the Suspend state.

3. The method according to claim 2, **characterized in that** after the SGW releases the local GBR bearer of the SGW according to the bearer identifier, and before the SGW sets the local state of the user in the SGW to the Suspend state, the method further comprises:
a Packet Data Network Gateway (PGW) receiving the Suspend message sent by the SGW;
the PGW releasing the local GBR bearer of the PGW according to the bearer identifier in the Suspend message, and setting the local state of the user in the PGW to the Suspend state;
and the PGW sending the Suspend response message to the SGW**.**

4. The method according to claim 3, **characterized in that** before the PGW sends the Suspend response message to the SGW, the method further comprises:
the PGW notifying a Policy and Charging Rules Function (PCRF) to release the local GBR bearer of the PCRF.

5. The method according to claim 2, **characterized in that** after the SGW sets the local state of the user in the SGW to the Suspend state, the method further comprises:
the SGW sending the Suspend response message to the MME.

6. The method according to any one of claims 2-5, **characterized in that** in a Single Radio Voice Call Continuity (SRVCC) procedure, the bearer identifier further comprises: a Voice Bearer (VB) mark which is used for representing that the releasing of the GBR bearer is initiated by the SRVCC procedure.

7. The method according to any one of claims 1-6, **characterized in that** before the MME releases the local GBR bearer of the user in the MME and sends the Suspend message to the SGW, the method further comprises:
the user switching from an Evolved Universal Terrestrial Radio Access Network (EUTRAN) to an Enhanced Data Rate for the Global System for Mobile communications Evolution Radio Access Network (GERAN), wherein the GERAN does not support a Dual Transfer Mode (DTM).

8. A Suspend method, **characterized by** comprising:
a Service Gateway (SGW)/Packet Data Network Gateway (PGW) receiving a Suspend message from a Mobility Management Entity (MME);
and the SGW/PGW releasing a local Guaranteed Bit Rate (GBR) bearer of the SGW/PGW according to the Suspend message, and setting a local state of a user in the SGW/PGW to a Suspend state, wherein the Suspend state is used for instructing not to forward downlink data packet for the user;
and the SGW/PGW sending a Suspend response message to the MME.

9. A Suspend apparatus, **characterized in that** the Suspend apparatus is located in a Mobility Management Entity (MME) and comprises:
a first releasing component, configured to release a local Guaranteed Bit Rate (GBR) bearer of a user in the MME;
a first sending component, configured to send a Suspend message to a Service Gateway (SGW), wherein the Suspend message is used for instructing the SGW to release a local GBR bearer of the SGW according to the Suspend message and set a local state of the user in the SGW to a Suspend state, wherein the Suspend state is used for instructing not to forward downlink data packet for the user;
a first receiving component, configured to receive a Suspend message from the SGW;
and a first setting component, configured to set a local state of the user in the MME to a Suspend state according to the Suspend response message received from the first receiving component.

10. A Suspend apparatus, **characterized in that** the Suspend apparatus is located in a Service Gateway (SGW)/Packet Data Network Gateway (PGW) and comprises:
a second receiving component, configured to receive a Suspend message from a Mobility Management Entity (MME);
a second releasing component, configured to release a local Guaranteed Bit Rate (GBR) bearer of the SGW/PGW according to the Suspend message;
a second setting component, configured to set a local state of a user in the SGW/PGW to a Suspend state, wherein the Suspend state is used for instructing not to forward downlink data packet for the user;
and a second sending component, configured to send a Suspend response message to the MME.

11. A Suspend system, **characterized by** comprising: the Suspend apparatus located in a MME as claimed in claim 9 and the Suspend apparatus located in the SGW/ PGW as claimed in claim 10.
